# EUROPÄISCHE PATENTSCHRIFT

(11) **EP 3 726 114 B1**
(45) Veröffentlichungstag und Bekanntmachung des Hinweises auf die Patenterteilung: **07.12.2022**
(21) Anmeldenummer: 19169250.8
(22) Anmeldetag: 15.04.2019
(51) Int. Cl.: F16L 25/00, F16L 33/207, F16L 33/22, F16L 13/08, F16L 13/14, F16L 33/26, F16L 5/02, F16L 5/12, F16L 58/18, F16L 13/02, F16L 33/24

(54) **VERFAHREN ZUR HERSTELLUNG EINER MEDIENDICHTEN VERBINDUNG**
METHOD FOR PRODUCING AN HERMETICALLY SEALED CONNECTION
PROCÉDÉ DE FABRICATION D'UN RACCORDEMENT ÉTANCHE

(43) Veröffentlichungstag der Anmeldung: 21.10.2020
(73) Patentinhaber: Mahmutovic, Nedzib, 4060 Leonding (AT)
(72) Erfinder: Mahmutovic, Nedzib, 4060 Leonding (AT)
(74) Vertreter: Patentanwaltskanzlei Matschnig & Forsthuber OG

(56) Entgegenhaltungen:
- DE-A1- 10 065 573
- FR-A1- 2 668 576
- GB-A- 804 583

## Beschreibung

Die Erfindung betrifft ein Verfahren zur Herstellung einer mediendichten Verbindung zwischen einem Rohr und einem Verbinder.

Im Allgemeinen weisen flexible Spiralrohre im Vergleich mit ringförmigen bzw. wellenförmigen Rohren einen kleineren Strömungswiderstand auf und erleichtern dadurch den Wärmeaustausch zwischen einem im Rohr verlaufenden Medium, beispielweise einer Flüssigkeit, und einem außerhalb des Rohres befindlichen Medium. Ferner können solche Spiralrohre in der Regel frei gebogen werden, sodass eine optimale Anpassbarkeit in der Verlegung solcher Rohre ermöglicht wird.

Um ein Spiralrohr mit einem weiteren Rohr, einem Wärmespeicher, usw. zu verbinden, werden im Stand der Technik ein Verbinder mit einer einfachen Schraubverbindung und einer Dichtung, beispielsweise aus Gummi, verwendet. Allerdings ruft ein solcher Verbinder eine Beschädigung bei Teilen, wie beispielsweise der Dichtung, hervor was zum Auslecken des im Rohr verlaufenden Mediums führt. Auch können durch unvermeidbare chemische Reaktionen bzw. Alterung solche Dichtungen zum Versagen und Eindringen eines korrosiven Wärmeträgermediums in das zu erwärmende Medium (z.B. Trinkwasser) führen.

Ferner können auch lösbare Verbindungen zwischen Rohr und Verbinder vorgesehen sein, doch diese Verbindungen aus dem Stand der Technik neigen bei Vibrationen zur Undichtigkeit und Versagen.

Aus dem Stand der Technik offenbaren beispielsweise die GB 804 583 A, die DE 100 65 573 A1 und die FR 2 668 576 A1 ein Verfahren zur Herstellung einer möglichst mediendichten Verbindung zwischen einem Rohr und einem Verbinder.

Es ist eine Aufgabe der Erfindung ein verbessertes Verfahren zur Herstellung einer mediendichten und nicht lösbaren Verbindung zwischen einem Rohr und einem Verbinder bereitzustellen.

Diese Aufgabe wird dadurch gelöst, dass das obengenannte Verfahren folgende Schritte aufweist:
a) Bereitstellen eines flexiblen metallischen Rohres mit einer Mantelfläche und Wandstärke, wobei die Mantelfläche schraubenlinienförmig gewellt ist, und wobei das Rohr einen Endbereich aufweist,
b) Bereitstellen eines Verbinders, welcher einen Überwurfring und einen Einschraubstutzen umfasst, wobei der Überwurfring eine erste schraubenlinienförmige, zur Mantelfläche des Rohres korrespondierende Kontur aufweist und auf den Endbereich des Rohres auf die Mantelfläche außenseitig händisch aufschraubbar ist, und wobei der Einschraubstutzen eine zweite schraubenlinienförmige, zur Mantelfläche des Rohres korrespondierende Kontur aufweist und in den Endbereich des Rohres innenseitig händisch einschraubbar ist,
c) Aufschrauben des Überwurfringes auf den Endbereich des Rohres, wobei zur Erfüllung einer freien Schraubverbindung zwischen dem Überwurfring und der Mantelfläche des Rohres ein Spiel vorhanden ist,
d) Einschrauben des Einschraubstutzen in den Endbereich des Rohres, wobei zur Erfüllung einer freien Schraubverbindung zwischen dem Einschraubstutzen und der Mantelfläche des Rohres ein Spiel vorhanden ist, und wobei zumindest ein Abschnitt des Endbereichs des Rohres zwischen der ersten Kontur des Überwurfringes und der zweiten Kontur des Einschraubstutzens angeordnet ist,
e) Verpressen des Überwurfringes und des Einschraubstutzens gegeneinander zur zumindest teilweisen Behebung des Spiels, sodass der Abschnitt des Endbereiches des Rohres mediendicht und formschlüssig an der ersten Kontur des Überwurfringes und an der zweiten Kontur des Einschraubstutzens anliegt,
   wobei in einem weiteren Schritt f) der Einschraubstutzen mit dem Überwurfring verschweißt wird und/oder
   in einem weiteren Schritt g) der Überwurfring an einem Ende des Überwurfrings mit dem Rohr verlötet wird. Die Reihenfolge von Schritt c) und Schritt d) ist grundsätzlich frei, es sei denn die Reihenfolge ist technisch bedingt, wie oben, einzuhalten.

Um ein händisches Aufschrauben zu ermöglichen entspricht das Spiel bzw. der Abstand zwischen der ersten Kontur und der zweiten Kontur beispielsweise mindestens 1,1 mal der Wandstärke des Rohres.

Die erste und zweite schraubenlinienförmige Kontur ist gewissermaßen als Gewinde zu verstehen, welches mit der schraubenlinienförmig gewellten Mantelfläche des Rohres, welche Mantelfläche gewissermaßen als Gegengewinde zu der ersten und zweiten Kontur ausgebildet ist, korrespondieren.

Durch das Verpressen in Schritt e) ist die Verbindung zwischen dem Rohr und dem Verbinder bereits mediendicht.

Unter dem Begriff "Spiel" sind beispielsweise Hohlräume zwischen der ersten Kontur und der Mantelfläche, und zwischen der zweiten Kontur und der Mantelfläche zu verstehen, wobei dies dem Fachmann bekannt ist. Ein solches Spiel bzw. solche Hohlräume sind zwangsweise vorhanden, um ein einfaches Ein- und Aufschrauben des Überwurfrings und des Einschraubstutzen per Hand zu ermöglichen.

Bei dem flexiblen metallischen Rohr kann es sich um ein sogenanntes Spiralrohr handeln. Es sei darauf hingewiesen, dass zwischen einem Spiralrohr und einem Wellenrohr insofern ein Unterschied besteht, als das Wellenrohr zueinander parallel angeordnete und in Längsrichtung des Wellenrohres orthogonal stehende Ausbuchtungen aufweist, welche insgesamt kein Gewinde oder Ähnliches bilden, was ein Aufschrauben eines Gegenstückes ermöglicht.

Bei Verwendung eines Druckgerätes werden üblicherweise keine Spiralrohre eingesetzt, da die Verbindungsstücke zwischen dem Rohr und Verbindern aus dem Stand der Technik nicht mediendicht sind sowie auch nicht die dafür notwendigen Sicherheiten und Normerfordernisse für den Einsatz in Druckgeräten aufweisen und deshalb nicht dafür eingesetzt werden, obwohl diese viele Vorteile bieten (flexibel formbar, usw.). Die Erfindung ermöglicht den Einsatz solcher Spiralrohre in Druckgeräten.

Es kann vorgesehen sein, dass der Einschraubstutzen einen Verbindungsabschnitt, welcher in einem eingeschraubten Zustand des Einschraubstutzens in dem Rohr von dem Endbereich des Rohres vorsteht und zum Anschluss einer weiteren Einrichtung zur Zu- und Abfuhr eines Mediums vorgesehen ist, und einen Schraubabschnitt, welcher die zweite schraubenlinienförmige Kontur aufweist, umfasst.

Der Verbindungsabschnitt kann beispielsweise ein zusätzliches Gewinde oder Flansch aufweisen, welches mit einem Anschluss der weiteren Einrichtung korrespondiert.

Es kann vorgesehen sein, dass sich der Verbindungsabschnitt in einem Übergangsabschnitt hin zu dem Schraubabschnitt verjüngt.

Es ist erfindungsgemäß vorgesehen, dass in einem weiteren Schritt f) der Einschraubstutzen mit dem Überwurfring verschweißt wird, und/oder in einem weiteren Schritt g) der Überwurfring an einem Ende des Überwurfrings mit dem Rohr verlötet wird.

Vorteil besteht darin, dass das in der Regel dünnwändige Rohr durch den Überwurfring und den Einschraubstutzen geschützt wird, sodass während des Schweißens am Rohr kein Schaden entstehen kann.

Es kann vorgesehen sein, dass der Einschraubstutzen im Übergangsabschnitt mit dem Überwurfring verschweißt wird.

Es kann vorgesehen sein, dass der Einschraubstutzen mit dem Überwurfring und dem Rohr verschweißt wird, vorzugsweise im Übergangsabschnitt des Einschraubstutzens.

Es kann vorgesehen sein, dass der Überwurfring zumindest eine Fase an einem seiner Enden aufweist, vorzugsweise zwei Fasen an gegenüberliegenden Enden aufweist.

Eine Fase ist im Allgemeinen eine abgeschrägte Fläche an einer Werkstückkante. Der Fasenwinkel ist gemessen von der Ebene der Kante, an welcher die Fase angeordnet wird. Es kann vorgesehen sein, dass der Fasenwinkel abhängig vom jeweils verwendeten Medium ausgebildet ist. Fasen werden an Bauteilen häufig zur Entfernung von Graten, der Verringerung der Verletzungsgefahren und der Vereinfachung von weiteren Montagen angebracht.

Die zumindest eine Fase des Überwurfrings ist beispielsweise wegen der weiteren
Lötbarkeit und Schutz vor Rohrbruch vorgesehen.

Ein weiterer Vorteil einer Lötverbindung zwischen dem Rohr und dem Überwurfring liegt darin, dass durch das Löten und dem Verpressen alle Spalten geschlossen werden und damit die Gefahr von Spaltkorrosionsbildung verhindert wird.

Spaltkorrosion tritt an Metallteilen bei Vorhandensein eines korrosiven Mediums in engen, nicht abgeschlossenen Spalten wie Überlappungen und/ oder nicht durchgeschweißten Schweißnähten auf. Treibende Kraft sind Konzentrationsunterschiede zwischen dem Medium im Spalt und im Bereich außerhalb des Spalts, welche durch die im Spalt gehemmte Diffusion der Reaktionspartner verursacht werden. Selbst nicht-rostende CrNi-Stähle können in Spalten korrodieren, wenn dort keine schützende Oxidschicht vorhanden ist. Spaltkorrosion kann verhindert werden, indem man konstruktiv auf Spalte verzichtet oder diese so groß ausführt, dass die Diffusion der Medien nicht behindert wird.

Spaltkorrosion tritt beispielsweise auf, wenn bei Verwendung von Edelstahl die Oxidschicht des Edelstahls zerstört wird, beispielsweise durch Schweißen oder mechanisches Kratzen oder dass aggressive Medien bei gleichzeitigem Fehlen von Sauerstoff vorhanden sind. Die Spaltkorrosion tritt aus diesem Grund häufig in engen Spalten und kleinen Hohlräumen auf.

Es kann vorgesehen sein, dass in Schritt e) das Verpressen des Überwurfringes und des Einschraubstutzens mittels einem Presswerkzeug erfolgt.

Es kann vorgesehen sein, dass die schraubenlinienförmig gewellte Mantelfläche als Gewinde mit Gewindegängen ausgebildet ist.

Es kann vorgesehen sein, dass der Abschnitt des Endbereichs des Rohres, welcher zwischen der ersten Kontur des Überwurfringes und der zweiten Kontur des Einschraubstutzens angeordnet ist, eine Mindestlänge von zwei Gewindegängen, vorzugsweise drei Gewindegängen, aufweist.

Es kann vorgesehen sein, dass die Wandstärke des Rohres 2mm beträgt.

Es kann vorgesehen sein, dass die Länge der zweiten Kontur des Einschraubstutzens im Vergleich zur Länge der ersten Kontur des Überwurfringes um 7 mal der Wandstärke des Rohres länger oder kürzer ist, abhängig vom verwendeten Medium.

Es kann vorgesehen sein, dass der Schraubabschnitt des Einschraubstutzens an seinem dem Verbindungsabschnitt gegenüberliegenden Ende eine Abschlusskante aufweist, welche mit einem Radius abgerundet ist, vorzugsweise ist der Radius gleich der Wandstärke des Rohres.

Durch die abgerundete Abschlusskante wird vermieden, dass das Spiralrohr innenseitig beim Einschrauben des Einschraubstutzens beschädigt wird.

Nachfolgend wird die Erfindung anhand von beispielhaften Zeichnungen näher erläutert. Hierbei zeigt
Fig. 1 eine Detailschnittansicht eines Rohres mit einem aufgeschraubten Überwurfring und einem eingeschraubten Einschraubstutzen, wobei der Überwurfring und der Einschraubstutzen nicht gegeneinander verpresst sind,
Fig. 1a eine Detailvergrößerung eines Bereichs des Einschraubstutzens aus Fig. 1,
Fig. 2 eine Detailschnittansicht des Rohres aus Fig. 1, wobei der Überwurfring und der Einschraubstutzen gegeneinander verpresst sind,
Fig. 3 eine Schnittansicht des Rohres aus Fig. 2, wobei der Überwurfring und der Einschraubstutzen miteinander verschweißt sind und der Überwurfring mit dem Rohr verlötet ist,
Fig. 4 eine Schnittansicht des Rohres aus Fig. 3, wobei das Rohr beispielhaft in einem Druckgerät verlegt ist, und
Fig. 5 zeigt ein weiteres Beispiel eines Rohres mit einem Verbinder, welcher einen Flansch aufweist.

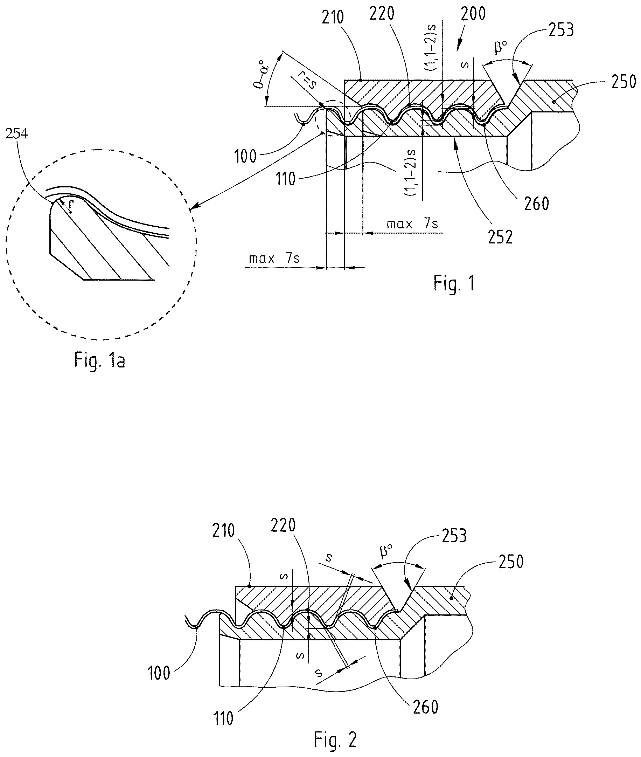

**Fig. 1** zeigt eine Detailansicht eines Querschnittes eines beispielhaften Rohrs **100,** wobei das Rohr **100** mit einem Verbinder **200** verbunden ist. Beim Verfahren zur Herstellung einer mediendichten nicht lösbaren Verbindung zwischen dem Rohr **100** und dem Verbinder **200,** wird zuerst das flexible metallische Rohres **100** mit einer Mantelfläche und Wandstärke s bereitgestellt, wobei die Mantelfläche schraubenlinienförmig gewellt ist, wobei die schraubenlinienförmig gewellte Mantelfläche als Gewinde mit Gewindegängen ausgebildet ist, und wobei das Rohr **100** einen Endbereich **110** aufweist. Ferner wird der Verbinder **200,** welcher einen Überwurfring **210** und einen Einschraubstutzen **250** umfasst, bereitgestellt, wobei der Überwurfring **210** eine erste schraubenlinienförmige, zur Mantelfläche des Rohres **100** korrespondierende Kontur **220** aufweist und auf den Endbereich **110** des Rohres **100** auf die Mantelfläche außenseitig händisch aufschraubbar ist, und wobei der Einschraubstutzen **250** eine zweite schraubenlinienförmige, zur Mantelfläche des Rohres **100** korrespondierende Kontur **260** aufweist und in den Endbereich **110** des Rohres **100** innenseitig händisch einschraubbar ist.

Der der Einschraubstutzen **250** einen Verbindungsabschnitt **251,** welcher in einem eingeschraubten Zustand des Einschraubstutzens **250** in dem Rohr **100** von dem Endbereich **110** des Rohres **100** vorsteht und zum Anschluss einer weiteren Einrichtung zur Zu- und Abfuhr eines Mediums vorgesehen ist, und einen Schraubabschnitt **252,** welcher die zweite schraubenlinienförmige Kontur **260** aufweist, umfasst. Der Verbindungsabschnitt **251** verjüngt sich in dem in den Figuren gezeigten Beispiel in einem Übergangsabschnitt **253** hin zu dem Schraubabschnitt **252.**

Der Überwurfring **210** weist in dem gezeigten Beispiel zwei entgegengesetzte Enden mit jeweils einer Fase auf, wobei eine erste Fase außenseitig an jenem Ende angeordnet ist, welches Ende dem Übergangsabschnitt **253** des Einschraubstutzens **250** gegenüberliegt bzw. am nächsten ist, und wobei eine zweite Fase innenseitig an jenem Ende des Überwurfringes **210** angeordnet ist, welches Ende dem Verbindungsabschnitt **251** des Einschraubstutzens **250** entgegengesetzt ist.

Eine Fase ist im Allgemeinen eine abgeschrägte Fläche an einer Werkstückkante. Der Fasenwinkel **α** ist gemessen von der Ebene der Kante, an welcher die Fase angeordnet wird, wobei der Fasenwinkel **α** beispielsweise in **Fig. 1** eingezeichnet ist. Es kann vorgesehen sein, dass der Fasenwinkel **α** abhängig vom jeweils verwendeten Medium ausgebildet ist.

Aufgrund dieser Ausführungsform des Einschraubstutzens **250,** wie in den Figuren ersichtlich ist, wird der zuerst der Überwurfring **210** auf den Endbereich **110** des Rohres **100** aufgeschraubt, wobei zur Erfüllung einer freien Schraubverbindung zwischen dem Überwurfring **210** und der Mantelfläche des Rohres **100** ein Spiel vorhanden ist.

Nachfolgend wird der Einschraubstutzen **250** in den Endbereich **110** des Rohres **100** eingeschraubt, wobei zur Erfüllung einer freien Schraubverbindung zwischen dem Einschraubstutzen **250** und der Mantelfläche des Rohres **100** ein Spiel vorhanden ist, und wobei zumindest ein Abschnitt des Endbereichs **110** des Rohres **100** zwischen der ersten Kontur **220** des Überwurfringes **210** und der zweiten Kontur **260** des Einschraubstutzens **250** angeordnet ist. In **Fig. 1** ist ein solcher aufgeschraubter Zustand des Überwurfrings **210** und ein solcher eingeschraubter Zustand des Einschraubstutzens **250** zu sehen, wobei ebenso das Spiel bzw. Hohlräume zwischen der ersten Kontur **220** des Überwurfrings **210** und der Mantelfläche und der zweiten Kontur **260** des Einschraubstutzens **250** und der Mantelfläche ersichtlich ist/sind.

In **Fig. 1** bzw. in der Detailvergrößerung von **Fig. 1a** ist ebenfalls zu sehen, dass der Schraubabschnitt **252** des Einschraubstutzens **250** an seinem dem Verbindungsabschnitt **251** gegenüberliegenden Ende eine Abschlusskante **254** aufweist, welche mit einem Radius **r** abgerundet ist, vorzugsweise ist der Radius **r** gleich der Wandstärke **s** des Rohres **100.**

Anschließend wird der Überwurfringes **210** und des Einschraubstutzens **250** gegeneinander zur zumindest teilweisen Behebung des Spiels verpresst, sodass der Abschnitt des Endbereiches **110** des Rohres **100** mediendicht und formschlüssig an der ersten Kontur **220** des Überwurfringes **210** und an der zweiten Kontur **260** des Einschraubstutzens **250** anliegt, wie in **Fig. 2** dargestellt ist. Das Verpressen des Überwurfringes **210** und des Einschraubstutzens **250** erfolgt beispielsweise mittels einem Presswerkzeug, wobei ein Stützdorn in den Einschraubstutzen **250** eingeführt und ein äußerer Druck auf den Überwurfring **210** ausgeübt wird, sodass das Spiel bzw. die Hohlräume zwischen den Konturen **220, 260** und der Mantelfläche behoben sind.

Zur mediendichten Verbindung zwischen dem Rohr **100** und dem Verbinder **200** weist der Abschnitt des Endbereichs **110** des Rohres **100,** welcher zwischen der ersten Kontur **220** des Überwurfringes **210** und der zweiten Kontur **260** des Einschraubstutzens **250** angeordnet ist, eine Länge von drei Gewindegängen auf, wie in den Figuren ersichtlich ist.

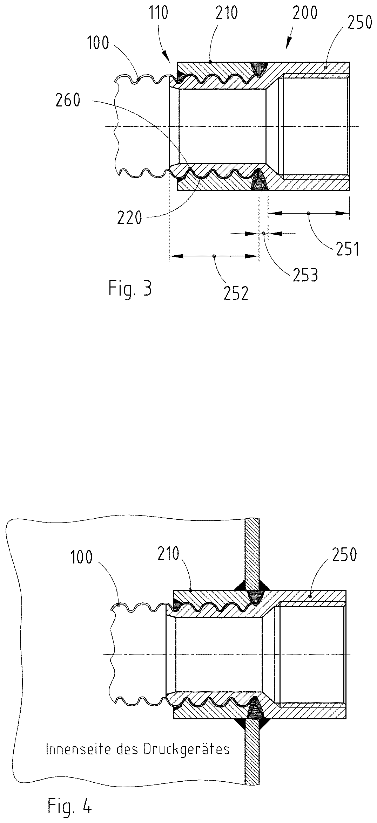

In einem weiteren Schritt wird der Einschraubstutzen **250** im Übergangsabschnitt **253** mit dem Überwurfring **210** verschweißt, wie in **Fig. 3** zu sehen ist. Bei dem Verschweißen wird gleichzeitig auch ein Ende des Rohrs **100** mitverschweißt. Die Schweißnaht verläuft dabei entlang der ersten Fase des Überwurfrings **210** und dem Übergangsabschnitt **253** des Einschraubstutzens **250.**

In einem weiteren Schritt wird der Überwurfring **210** an jenem Ende, welches die zweite Fase aufweist, mit dem Rohr **210** verlötet. Dadurch soll eine sonst mögliche Spaltkorrosion verhindert werden.

Fig. 4 zeigt ferner einen beispielhaften Einbau eines durch das oben beschriebene Verfahren hergestellte Rohr **100** in einem Druckgerät mit einem Gehäuse, wobei der Verbinder **200** in einer Ausnehmung des Gehäuses angeordnet ist.

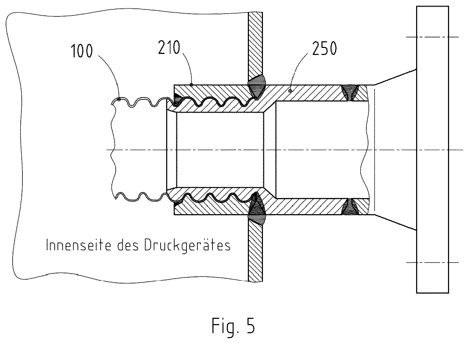

Fig. 5 zeigt ferner einen beispielhaften Einbau eines durch das oben beschriebene Verfahren hergestellte Rohr **100** in einem Druckgerät mit einem Gehäuse, wobei der Verbinder **200** in einer Ausnehmung des Gehäuses angeordnet ist, und wobei der Verbindungsabschnitt des Einschraubstutzens einen Flansch aufweist.

**LISTE DER BEZUGSZEICHEN**

| | |
|---|---|
| Rohr | 100 |
| Endbereich | 110 |
| Verbinder | 200 |
| Überwurfring | 210 |
| Erste Kontur | 220 |
| Einschraubstutzen | 250 |
| Verbindungsabschnitt | 251 |
| Schraubabschnitt | 252 |
| Übergangsabschnitt | 253 |
| Abschlusskante | 254 |
| Zweite Kontur | 260 |
| Wandstärke | s |
| Radius | r |

## Patentansprüche

1. Verfahren zur Herstellung einer mediendichten Verbindung zwischen einem Rohr (100) und einem Verbinder (200), wobei das Verfahren die folgenden Schritte aufweist:
a) Bereitstellen eines flexiblen metallischen Rohres (100) mit einer Mantelfläche und Wandstärke (s), wobei die Mantelfläche schraubenlinienförmig gewellt ist, und wobei das Rohr (100) einen Endbereich (110) aufweist,
b) Bereitstellen eines Verbinders (200), welcher einen Überwurfring (210) und einen Einschraubstutzen (250) umfasst, wobei der Überwurfring (210) eine erste schraubenlinienförmige, zur Mantelfläche des Rohres (100) korrespondierende Kontur (220) aufweist und auf den Endbereich (110) des Rohres (100) auf die Mantelfläche außenseitig händisch aufschraubbar ist, und wobei der Einschraubstutzen (250) eine zweite schraubenlinienförmige, zur Mantelfläche des Rohres (100) korrespondierende Kontur (260) aufweist und in den Endbereich (110) des Rohres (100) innenseitig händisch einschraubbar ist,
c) Aufschrauben des Überwurfringes (210) auf den Endbereich (110) des Rohres (100), wobei zur Erfüllung einer freien Schraubverbindung zwischen dem Überwurfring (210) und der Mantelfläche des Rohres (100) ein Spiel vorhanden ist,
d) Einschrauben des Einschraubstutzen (250) in den Endbereich (110) des Rohres (100), wobei zur Erfüllung einer freien Schraubverbindung zwischen dem Einschraubstutzen (250) und der Mantelfläche des Rohres (100) ein Spiel vorhanden ist, und wobei zumindest ein Abschnitt des Endbereichs (110) des Rohres (100) zwischen der ersten Kontur (220) des Überwurfringes (210) und der zweiten Kontur (260) des Einschraubstutzens (250) angeordnet ist,
e) Verpressen des Überwurfringes (210) und des Einschraubstutzens (250) gegeneinander zur zumindest teilweisen Behebung des Spiels, sodass der Abschnitt des Endbereiches (110) des Rohres (100) mediendicht und formschlüssig an der ersten Kontur (220) des Überwurfringes (210) und an der zweiten Kontur (260) des Einschraubstutzens (250) anliegt, **dadurch gekennzeichnet, dass**
in einem weiteren Schritt f) der Einschraubstutzen (250) mit dem Überwurfring (210) verschweißt wird und/ oder
in einem weiteren Schritt g) der Überwurfring (210) an einem Ende des Überwurfrings (210) mit dem Rohr (210) verlötet wird.

2. Verfahren nach Anspruch 1, **dadurch gekennzeichnet, dass** der Einschraubstutzen (250) einen Verbindungsabschnitt (251), welcher in einem eingeschraubten Zustand des Einschraubstutzens (250) in dem Rohr (100) von dem Endbereich (110) des Rohres (100) vorsteht und zum Anschluss einer weiteren Einrichtung zur Zu- und Abfuhr eines Mediums vorgesehen ist, und einen Schraubabschnitt (252), welcher die zweite schraubenlinienförmige Kontur (260) aufweist, umfasst.

3. Verfahren nach Anspruch 2, **dadurch gekennzeichnet, dass** sich der Verbindungsabschnitt (251) in einem Übergangsabschnitt (253) hin zu dem Schraubabschnitt (252) verjüngt.

4. Verfahren nach Anspruch 1 bis 3, **dadurch gekennzeichnet, dass** der Einschraubstutzen (250) im Übergangsabschnitt (253) mit dem Überwurfring (210) verschweißt wird.

5. Verfahren nach einem der Ansprüche 2 bis 4, **dadurch gekennzeichnet, dass** der Einschraubstutzen (250) mit dem Überwurfring (210) und dem Rohr (100) verschweißt wird, vorzugsweise im Übergangsabschnitt (253) des Einschraubstutzens (250).

6. Verfahren nach einem der Ansprüche 1 bis 5, **dadurch gekennzeichnet, dass** der Überwurfring (210) zumindest eine Fase an einem seiner Enden aufweist, vorzugsweise zwei Fasen an gegenüberliegenden Enden aufweist.

7. Verfahren nach einem der Ansprüche 1 bis 6, **dadurch gekennzeichnet, dass** in Schritt e) das Verpressen des Überwurfringes (210) und des Einschraubstutzens (250) mittels einem Presswerkzeug erfolgt.

8. Verfahren nach einem der Ansprüche 1 bis 7, **dadurch gekennzeichnet, dass** die schraubenlinienförmig gewellte Mantelfläche als Gewinde mit Gewindegängen ausgebildet ist.

9. Verfahren nach Anspruch 8, **dadurch gekennzeichnet, dass** der Abschnitt des Endbereichs (110) des Rohres (100), welcher zwischen der ersten Kontur (220) des Überwurfringes (210) und der zweiten Kontur (260) des Einschraubstutzens (250) angeordnet ist, eine Mindestlänge von zwei Gewindegängen, vorzugsweise drei Gewindegängen, aufweist.

## Claims

1. Method of making a fluid tight connection between a tube (100) and a connector (200), the method comprising the steps of:
a) providing a flexible metallic tube (100) having a circumferential surface and wall thickness (s), wherein the circumferential surface is helically corrugated, and wherein the tube (100) has an end portion (110),
b) providing a connector (200) which comprises a retaining ring (210) and a screw-in connecting piece (250), wherein the union ring (210) has a first helical contour (220) corresponding to the outer surface of the tube (100) and can be screwed onto the end region (110) of the tube (100) on the outer surface by hand, and wherein the screw-in connecting piece (250) has a second helical contour (260) corresponding to the outer surface of the tube (100) and can be screwed manually into the end region (110) of the tube (100) on the inside,
c) screwing the retaining ring (210) onto the end region (110) of the tube (100), wherein for a free screw connection between the retaining ring (210) and the outer surface of the pipe (100) a clearance is provided,
d) screwing the screw-in connecting piece (250) into the end region (110) of the tube (100), wherein, in order to achieve a free screw connection between the screw-in connecting piece (250) and the circumferential surface of the tube (100), a clearance is provided, and wherein at least a section of the end region (110) of the tube (100) is arranged between the first contour (220) of the retaining ring (210) and the second contour (260) of the screw-in connecting piece (250),
e) pressing the retaining ring (210) and the screw-in connecting piece (250) against each other to at least partially eliminate the clearance, so that the portion of the end region (110) of the tube (100) is pressed in a fluid-tight and form-fitting manner against the first contour (220) of the ring (210) and on the second contour (260) of the screw-in connecting piece (250),
**characterized in that**
in a further step f) the screw-in connecting piece (250) is welded to the retaining ring (210) and/or in a further step g) the retaining ring (210) is soldered to the tube (210) at one end of the retaining ring (210).

2. Method according to claim 1, **characterized in that** the screw-in connecting piece (250) comprises a connecting portion (251) which, in a screwed-in state of the screw-in connecting piece (250) in the pipe (100), protrudes from the end region (110) of the pipe (100) and is provided for connection of a further device for supply and discharge of a medium, and a screw portion (252) which has the second helical contour (260).

3. The method according to claim 2, **characterized in that** the connecting portion (251) tapers in a transition portion (253) towards the screw portion (252).

4. Method according to claim 1 to 3, **characterized in that** the screw-in connecting piece (250) is tapered in the transition section (253) towards the screw section is welded to the retaining ring (210) in the transition section (253).

5. Method according to any one of claims 2 to 4, **characterized in that** the screw-in socket (250) is welded to the retaining ring (210) and the tube (100), preferably in the transition section (253) of the screw-in socket (250).

6. Method according to any one of claims 1 to 5, **characterized in that** the retaining ring (210) has at least one chamfer at one of its ends, preferably has two chamfers at opposite ends.

7. Method according to one of the claims 1 to 6, **characterized in that** in steps) the compression of the retaining ring (210) and the screw-in connecting piece (250) is carried out by means of a compression tool.

8. Method according to any one of claims 1 to 7, **characterized in that** the helically corrugated circumferential surface is formed as a thread with threads.

9. Method according to claim 8, **characterized in that** the section of the end region (110) of the tube (100), which is arranged between the first contour (220) of the retaining ring (210) and the second contour (260) of the screw-in connecting piece (250), has a minimum length of two threads, preferably three threads.

## Revendications

1. Procédé de fabrication d'une connexion étanche aux fluides, et de préférence non détachable, entre un tuyau (100) et un connecteur (200), le procédé comprenant les étapes suivantes :
a) fournir un tube métallique flexible (100) ayant une surface d'enveloppe et une épaisseur de paroi (s), la surface d'enveloppe étant ondulée de manière hélicoïdale, et le tube (100) ayant une partie d'extrémité (110),
b) mise à disposition d'un connecteur (200), qui comprend une bague d'accouplement (210) et un raccord à visser (250). (250), la bague d'accouplement (210) présentant un premier contour hélicoïdal (220) correspondant à la surface d'enveloppe du tube (100) et pouvant être vissée manuellement sur la zone d'extrémité (110) du tube (100) sur la surface d'enveloppe côté extérieur, et le raccord à visser (250) présentant un deuxième contour hélicoïdal (260) correspondant à la surface d'enveloppe du tube (100) et pouvant être vissé à la main, côté intérieur, dans la zone d'extrémité (110) du tube (100),
c) le vissage de la bague de transfert (210) sur la zone d'extrémité (110) du tube (100), dans lequel pour réaliser une liaison par vissage libre entre la bague d'accouplement (210) et la surface du tube (110) surface d'enveloppe du tube (100),
d) vissage de la tubulure à visser (250) dans la zone d'extrémité (110) du tube (100), un jeu étant présent entre la tubulure à visser (250) et la zone d'extrémité (110) du tube (100) pour assurer une liaison par vissage libre.
et la surface d'enveloppe du tube (100), et dans lequel au moins une partie du raccord à visser est de la zone d'extrémité (110) du tube (100) est disposé entre le premier contour (220) de la bague d'accouplement (210) et le deuxième contour (260) du raccord à visser (250),
e) presser la bague d'accouplement (210) et le raccord à visser (250) l'un contre l'autre pour éliminer au moins partiellement le jeu, de sorte que la section de la zone d'extrémité (110)
du tube (100) de manière étanche au fluide et par complémentarité de forme sur le premier contour (220) du raccord à visser, bague d'accouplement (210) et contre le deuxième contour (260) du raccord à visser (250),
**caractérisé en ce que**
au cours d'une autre étape f), le raccord à visser (250) est fixé à l'anneau en porte-à-faux (210). est soudé et/ou dans une autre étape g), la bague d'accouplement (210) est fixée à une extrémité de la bague d'accouplement (210). est soudée au tube (210).

2. Procédé selon la revendication 1, **caractérisé en ce que** le raccord à visser (250) comprend une section de connexion (251) qui, lorsque le raccord à visser (250) est vissé dans le tube (100), fait saillie de la zone d'extrémité (110) du tube (100) et est prévue pour le raccordement d'un autre dispositif d'amenée et d'évacuation d'un fluide, et une section à visser (252) qui présente le deuxième diamètre de vis (253) hélicoïdale (260).

3. Procédé selon la revendication 2, **caractérisé en ce que** la partie d'assemblage s'étend vers l'extérieur. (251) dans une section de transition (253) vers la section de vissage. (252) se rétrécit.

4. Procédé selon les revendications 1 à 3, **caractérisé en ce que** le raccord fileté (250) est soudé à la bague d'accouplement (210) dans la section de transition (253).

5. Procédé selon l'une quelconque des revendications 2 à 4, **caractérisé en ce que** l'embout fileté (250) est soudé à la bague d'accouplement (210) et au tube (100), de préférence dans la partie de transition (253) de l'embout fileté (250).

6. Procédé selon l'une quelconque des revendications 1 à 5, **caractérisé en ce que** la bague d'accouplement (210) présente au moins un chanfrein à l'une de ses extrémités, de préférence deux chanfreins à des extrémités opposées.

7. Procédé selon l'une quelconque des revendications 1 à 6, **caractérisé en ce que**, aux étapes), le pressage de la bague d'accouplement (210) et de l'embout fileté (250) est effectué au moyen d'un outil de pressage.

8. Procédé selon l'une des revendications 1 à 7, **caractérisé en ce que** la surface d'enveloppe ondulée en forme d'hélice est réalisée sous la forme d'un filetage avec des pas de vis.

9. Procédé selon la revendication 8, **caractérisé en ce que** la partie de la zone d'extrémité (110) du tube (100) qui est située entre le premier contour (220) de la bague d'accouplement (210) et le deuxième contour (260) de l'embout fileté (250) a une longueur inférieure à deux mètres longueur minimale de deux filets, de préférence de trois filets
